# EUROPÄISCHE PATENTANMELDUNG

(11) **EP 1 326 460 A1**
(43) Veröffentlichungstag der Anmeldung: **09.07.2003**
(21) Anmeldenummer: 01130732.9
(22) Anmeldetag: 21.12.2001
(51) Int. Cl.: H04Q 7/38, H04L 12/28, H04L 1/18, H04Q 7/22

(54) **Verfahren und System zum Funkzellenwechsel in einem zellularen Paketnetzwerk**

(71) Anmelder: SIEMENS AKTIENGESELLSCHAFT, 80333 München (DE)
(72) Erfinder: Kroth, Norbert, 14471 Potsdam (DE); Schniedenharn, Joerg, 13587 Berlin (DE)

(57) **Zusammenfassung**

Verfahren zur paketvermittelten Übertragung von in einer ersten Reihenfolge sortierten, Nutzinformation enthaltenden Datenpaketen in einem zellularen Funk-Kommunikationssystem, wobei mindestens eine Teilnehmerstation die empfangenen Datenpakete in einem Zwischenspeicher in die erste Reihenfolge sortiert und eine der ersten Funkzelle zugeordnete Basisstation mindestens eine den Inhalt des Zwischenspeichers der mindestens einen Teilnehmerstation betreffende Statusinformation in einem Statusspeicher vorhält und/oder abbildet. Erfindungsgemäß wird die Übermittelung der Datenpakete von der ersten Funkzelle an eine zweite Funkzelle übergeben und es werden durch eine der zweiten Funkzelle zugeordneten Basisstation die Datenpakete zu der mindestens einen Teilnehmerstation über mindestens einen weiteren Funkkanal übermittelt, wobei die Statusinformation von der der ersten Funkzelle zugeordneten Basisstation an die der zweiten Funkzelle zugeordneten Basisstation übergeben wird.

## Beschreibung

Die Erfindung betrifft ein Verfahren zur paketvermittelten Übertragung von in einer ersten Reihenfolge sortierten, Nutzinfomation enthaltenden Datenpaketen in einem zellularen Funk-Kommunikationssystem nach dem Oberbegriff des Anspruchs 1.

Die Erfindung betrifft ferner ein Funk-Kommunikationssystem zur paketvermittelten Übertragung von in einer ersten Reihenfolge sortierten, Nutzinfomation enthaltenden Datenpaketen nach dem Oberbegriff des Anspruchs 10.

Funk-Kommunikationssysteme gewinnen zunehmend an Bedeutung im geschäftlichen, aber auch privaten Bereich. In Funk-Kommunikationssystemen werden Informationen (beispielsweise Sprache, Bildinformation oder andere Daten) mit Hilfe von elektromagnetischen Wellen über eine Funkschnittstelle zwischen einer Basisstation und einer Teilnehmerstation, insbesondere einer Mobilstation, übertragen. Das Abstrahlen der elektromagnetischen Wellen erfolgt dabei mit Trägerfrequenzen, die in dem für das jeweilige System vorgesehenen Frequenzband liegen. Für zukünftige Mobilfunksysteme wird die Funkschnittstelle entsprechend TD/CDMA-Übertragungsverfahren bzw. FD/CDMA-Übertragungsverfahren in Übertragungskanäle unterteilt, die die Funlkressourcen der Funkschnittstelle zwischen den einzelnen Teilnehmerstationen separieren. Für UMTS (Universal Mobile Telecommunication System) oder andere Systeme der dritten Generation sind für die Übertragungskanäle beispielsweise Frequenzen im Frequenzband von ca. 2000 MHz vorgesehen.

Für das bereits erwähnte UMTS-Funk-Kommunikationssystem wird zwischen einem sogenannten FDD-Modus (Frequency Division Duplex) und einem TDD-Modus (Time Division Duplex) unterschieden. Der TDD-Modus zeichnet sich insbesondere dadurch aus, dass ein gemeinsames Frequenzband sowohl für die Datenübertragung in Aufwärtsrichtung (UL - Uplink) als auch in Abwärtsrichtung (DL - Downlink) genutzt wird, während der FDD-Modus für die beiden Übertragungsrichtungen jeweils ein unterschiedliches Frequenzband nutzt.

Zur Übertragung der Daten zwischen einer Basisstation und einer Teilnehmerstation kann zum einen auf Verfahren zurückgeriffen werden, die auf verbindungsorientierten Konzepten beruhen, und zum anderen auf Verfahren, die auf der Basis logischer Verbindungen beruhen. Bei verbindungsorientierten Datenübertragungen müssen während der gesamten Zeit der Datenübertragung physikalische Ressourcen der Funkschnittstelle bereitgestellt werden. Bei der Datenübertragung über logische Verbindungen ist eine dauerhafter Bereitstellung von physikalischen Ressourcen nicht nötig.

Ein Beispiel für Datenübertragung über logische Verbindungen ist die Datenübertragung mittels Datenpaketen. Hier besteht während der Dauer der gesamten Übertragung eine logische Verbindung zwischen der Basisstation und der Teilnehmerstation, jedoch werden physikalische Ressourcen nur während der eigentlichen Übertragungszeiten der Datenpakte bereitgestellt. Dieses Verfahren basiert darauf, dass die Daten in kurzen Datenpaketen, zwischen denen längere Pausen auftreten können, übermittelt werden. In den Pausen zwischen den Datenpaketen sind die physikalischen Ressourcen für andere logische Verbindungen verfügbar. Bezogen auf eine logische Verbindung werden physikalische Ressourcen eingespart.

Im Rahmen der Erfindung werden Nutzinformationen enthaltende Datenpakete, in einem zellularen Funk-Kommunikationssystem übertragen, wobei durch eine einer ersten Funkzelle zugeordneten Basisstation die Datenpakete in einer zweiten Reihenfolge an mindestens eine Teilnehmerstation über mindestens einen ersten Funkkanal zumindest teilweise übermittelt werden. Die mindestens eine Teilnehmerstation sortiert die empfangenen Datenpakete in einem Zwischenspeicher in die erste Reihenfolge, wobei die der ersten Funkzelle zugeordnete Basisstation mindestens eine den Inhalt des Zwischenspeichers der mindestens einen Teilnehmerstation betreffende Statusinformation in einem Statusspeicher vorhält und/oder abbildet.

Im Rahmen des ISO/OSI Referenzmodells umfassen die Basisstation ausschließlich die Funktionen der physikalischen Schicht, d.h. Funktionen die die Bitübertragungsschicht betreffen. Funktionalitäten höher geordneter Schichten, wie beispielsweise fehlerbehandelnde Verfahren der Sicherungsschicht oder Vermittlungsfunktionen der Vermittlungsschicht werden nicht in der Basisstaion durchgeführt, sondern in nachgeordneten Einheiten des Radionetzwerk-Subsystems wie beispielsweise dem Radionetzwerkkontroller.

Aufgabe der vorliegenden Erfindung ist es, ein Verfahren und ein Funk-Kommunikationssystem der eingangs genannten Art aufzuzeigen, welche ein effizientes Übertragen der Datenpakete in dem Funk-Kommunikationssystem bei einem Funkzellwechsel ermöglicht. Insbesondere wird angestrebt, die physikalischen Funkressourcen möglichst effizient zu nutzen bei möglichst geringem Verwaltungsaufwand in dem Radionetzwerk-Subsystems.

Diese Aufgabe wird hinsichtlich des Verfahrens durch ein Verfahren mit den Merkmalen nach Anspruch 1 gelöst.

Ausgestaltungen und Weiterbildungen der Erfindung sind Gegenstand der Unteransprüche.

Erfindungsgemäß wird die Übermittelung der Datenpakete von der ersten Funkzelle an eine zweite Funkzelle übergeben und durch eine der zweiten Funkzelle zugeordneten Basisstation werden die Datenpakete zu der mindestens einen Teilnehmerstation über mindestens einen weiteren Funkkanal übermittelt, wobei die Statusinformation von der der ersten Funkzelle zugeordneten Basisstation an die der zweiten Funkzelle zugeordneten Basisstation übergeben wird.

Durch dieses Verfahren wird der Verantwortungsbereich der Basisstationen signifikant erweitert. Nach den bislang bekannten Verfahren war die Basisstation auf Verfahren der physikalischen Schicht des Protokollstapels des ISO/OSI Referenzmodells beschränkt; die Verwaltung der Datenpakete nach erfolgtem Senden war nicht im Aufgabenbereich der Basisstationen. Im Fall eines Zellwechsels wurden die Statusinformationen verworfen und Datenpakete, die im Zwischenspeicher waren, mussten von der Basisstation der Zielfunkzelle erneut übermittelt werden. Durch das erfindungsgemäße Verfahren ist es nun möglich, dass auch bei einem Zellwechsel die im Zwischenspeicher befindlichen Datenpakete nicht erneut übermittelt werden müssen. Da die Statusinformation von der ersten Funkzelle an die zweite Funkzelle - die Zielfunkzelle - weitergegeben wird, sind in der Zielfunkzelle alle Statusinformationen vorhanden, so dass ohne Verzögerung bzw. Wiederholung von bereits an die Teilnehmerstation übermittelte Datenpakete mit der regulären Übermittlung von Datenpaketen fortgefahren werden kann. Dies führt dazu, dass die Datenpakete auch bei Zellwechsel effizient übertragen werden und die physikalischen Ressourcen der Funkschnittstelle nicht durch die erneute Übermittlung der Datenpakete belastet werden. Die Sortierung der Reihenfolge der Datenpakete bezieht im Rahmen dieses Verfahren sowohl auf die Zahl der gesendeten Datenpakete als auch auf die Ordnung der Datenpakete innerhalb einer Reihe. Bezüglich der ersten und zweiten Reihenfolge, die der gesendeten und empfangenen Reihenfolge der Datenpakete entsprechen, besteht die Möglichkeit, dass beide Reihenfolgen unterschiedlich ausgestaltet sind. Dies ist der in der Praxis der am häufigsten auftretende Fall. Aber es besteht auch die Möglichkeit, dass beide Reihenfolgen identisch sind.

In Weiterbildung der Erfindung sind die der ersten Funkzelle zugeordnete Basisstation und die der zweiten Funkzelle zugeordnete Basisstation identisch und die Statusinformation wird basisstations-intern übergeben. Dies ist ein besonders effizienter Anwendungsfall der Erfindung, da die Übergabe der Statusinformation auf "kürzestem Weg" stattfindet. Die Basisstadion ist logisch unterschiedlichen Funkzellen oder Zellsektoren zugewiesen und verwaltet diese Funkzellen voneinander unabhängig. Wechselt die Teilnehmerstation von einem Zellensektor in den benachbarten Zellensektor der selben Basisstation, so müssen die Statusinformation zwischen logisch unabhängigen Verwaltungseinheiten der zellsektoren ausgetauscht werden. Der für das gesamte Funk-Kommunikationssystem anfallende Verwaltungsaufwand bezüglich der Statusinformationen ist damit minimal.

In Weiterbildung der Erfindung wird die Statusinformation mittels eines Basisstationsnetzwerks zwischen der der ersten Funkzelle zugeordneten Basisstation und der der zweiten Funkzelle zugeordneten Basisstation übergeben. Ziel der Funk-Kommunikationssysteme ist es, die physikalische Schnittstelle, d.h. die Funkschnittstelle, möglichst wenig zu belasten. Wird die Statusinformation bei einem Funkzellenwechsel verworfen, so müssen die Datenpakete konventionell erneut übermittelt werden. Dies führt zu einer zusätzlichen Belastung der Funkschnittstelle. Werden die Statusinformationen aber vorteilhafterweise über das Basisstationsnetzwerks übergeben, so führt dies zu einer Entlastung der Funkschnittstelle und damit zu einer besseren und damit effektiveren Nutzung der Funk-Ressourcen.

In Weiterbildung der Erfindung wird die Statusinformation mittels der mindestens einen Teilnehmerstation an die der zweiten Funkzelle zugeordneten Basisstation übergeben. Der Inhalt der Statusinformation ist in der Regel kleiner als der Inhalt der Datenpakete im Zwischenspeicher, so dass die Übermittelung der Statusinformationen über den Funkkanal die Funk-Ressourcen weniger belastet als die erneute Übermittelung der Datenpakete. Auch mit diesem Verfahren ist die Funk-Ressource besser genutzt als bei erneuter Übermittelung der Datenpakete, wie es nach dem Stand der Technik vorgesehen ist.

In Weiterbildung der Erfindung werden der Statusspeicher in der der zweiten Funkzelle zugeordneten Basisstation und der Zwischenspeicher in der mindestens einen Teilnehmerstation gelöscht und/oder neu initialisiert. Die in dem Zwischenspeicher der mindestens einen Teilnehmerstation gespeicherten Datenpakete werden erneut von der der zweiten Funkzelle zugeordneten Basisstation übermittelt. Die im Zwischenspeicher befindlichen Datenpakete gehen auf diese Weise nicht verloren.

In Weiterbildung der Erfindung wird die Statusinformation in der zweiten Funkzelle zugeordneten Basisstation neu initialisiert und die Datenpakete des Zwischenspeichers der mindestens einen Teilnehmerstation werden an eine dem Zwischenspeicher nachgeordnete Sicherungsschicht, insbesondere die RLC Schicht (Radio Link Control), zur weiteren Verarbeitung weitergegeben. Durch dieses Verfahren wird die Funkschnittstelle nicht durch erneute Übermittelung aller im Zwischenspeicher befindlichen Datenpakete belastet. In der der Zwischenschicht nachgeordneten Sicherungsschicht werden Fehlerkorrekturverfahren durchgeführt, die fehlerhaft übertragene Datenpakete erkennen. Auf Anfrage dieser Schicht können nur die fehlerhaften Datenpakete erneut übertragen werden. Durch Ausnutzen der Fehlerkorrekturverfahren der nachgeschalteten Sicherungsschicht ist es möglich, die Zahl der erneut zu übermittelnden Datenpakete zu reduzieren und somit die Funkressourcen effizient zu nutzen.

In Weiterbildung der Erfindung werden die der ersten Funkzelle zugeordnete Basisstation und/oder die der zweiten Funkzelle zugeordnete Basisstation die Statusinformation des Zwischenspeichers aus und für den Fall, dass Datenpakete fehlerhaft übertragen wurden, werden die fehlerhaften Datenpakete erneut übermittelt. Dieses Verfahren ermöglicht es, bereits auf der physikalischen Schicht des Protokollstapels in der Basisstation Fehlerkorrekturverfahren anzuwenden. Somit wird der Verwaltungsaufwand in dem gesamten Funk-Kommunikationssystem minimiert. Besonders eignen sich für die Fehlerkorrektur ARQ-Verfahren (automatic repeat request).

In Weiterbildung der Erfindung werden die Datenpakete des Zwischenspeichers der mindestens einen Teilnehmerstation an eine dem Zwischenspeicher nachgeordnete Sicherungsschicht, insbesondere die Radio Link Control Schicht, zur weiteren Verarbeitung weitergegeben. In dieser Sicherungsschicht werden die Datenpakete erneut verarbeitet, wobei insbesondere Fehlerkorrekturverfahren und dabei vorzugsweise ARQ-Verfahren angewandt werden. Die Anwendung dieser Verfahren sowohl in der physikalisch Schicht basierend auf den Zwischenspeichern als auch in der Sicherungsschicht ermöglicht ein zweistufiges Fehlerkorrekturverfahren: Stufe eins in der Verantwortung der Basisstation und Stufe zwei in der Verantwortung eines Netzwerkcontrollers.

Der mindestens eine und/oder der weitere Funkkanal kann ein nach dem UMTS Standard spezifizierte HSDPA (High Speed Downlink Packet Access) Funkkanal sein. Insbesondere kann der Funkkanal nach dem Dokument
R2-012001, "UTRA High Speed Downlink Packet Access (Release 5)", Technical Specification Group Radio Access Network, 3^{rd} Generation Partnership Project (3GPP),
derzeit geplante HSDPA-Funkkanal (High Speed Downlink Packet Access) in einem nach UMTS-Standard arbeitenden Funk-Kommunikationssystem eingesetzt werden.

Im Hinblick auf das Funk-Kommunikationssystem wird die oben genannte Aufgabe durch ein Funk-Kommunikationssystem mit den Merkmalen nach Anspruch 10 gelöst.

Erfindungsgemäß umfasst das Funk-Kommunikationssystem Mittel zum Übergeben der Übermittelung der Datenpakete von der ersten Funkzelle an eine zweite Funkzelle, und eine der zweiten Funkzelle zugeordnete Basisstation umfasst Mittel zur Übermittelung der Datenpakete zu der mindestens einen Teilnehmerstation über mindestens einen weiteren Funkkanal, wobei Mittel vorhanden sind die Statusinformation von der der ersten Funkzelle zugeordneten Basisstation an die der zweiten Funkzelle zugeordneten Basisstation zu übergeben.

Für die Erfindung sind in einem Funk-Kommunikationssystem insbesondere die Komponenten Basisstation und Teilnehmerstation von Bedeutung.

Dabei umfasst die Basisstation mindestens Mittel zum Anordnen von den in einer ersten Reihenfolge sortierten Datenpaketen in eine zweite Reihenfolge und/oder Mittel zum zumindest teilweise Übermitteln der Datenpakete in der zweiten Reihenfolge an die mindestens eine Teilnehmerstation über mindestens einen ersten Funkkanal und Mittel zum Vorhalten und/oder Abbilden mindestens einer den Inhalt des Zwischenspeichers der mindestens einen Teilnehmerstation betreffenden Statusinformation in einem Statusspeicher.

Die Teilnehmerstation ist erfindungsgemäß derart ausgestaltet, dass sie Mittel zum Zwischenspeichern der empfangenen Datenpakete und Mittel zum Sortieren der empfangenen Datenpakete in einem Zwischenspeicher in die erste Reihenfolge umfasst.

Einzelheiten und Details der Erfindung werden nachfolgend anhand von Zeichnungen und darin dargestellter Ausführungsbeispiele näher erläutert.

Hierbei zeigen:
- Fig. 1:: die schematische Darstellung eines Funk-Kommunikationssystems zur Paketdatenübertragung bei Funkzellenwechsel,
- Fig. 2:: die schematische Darstellung eines Funk-Kommunikationssystems zur Paketdatenübertragung bei Funkzellensektorwechsel.

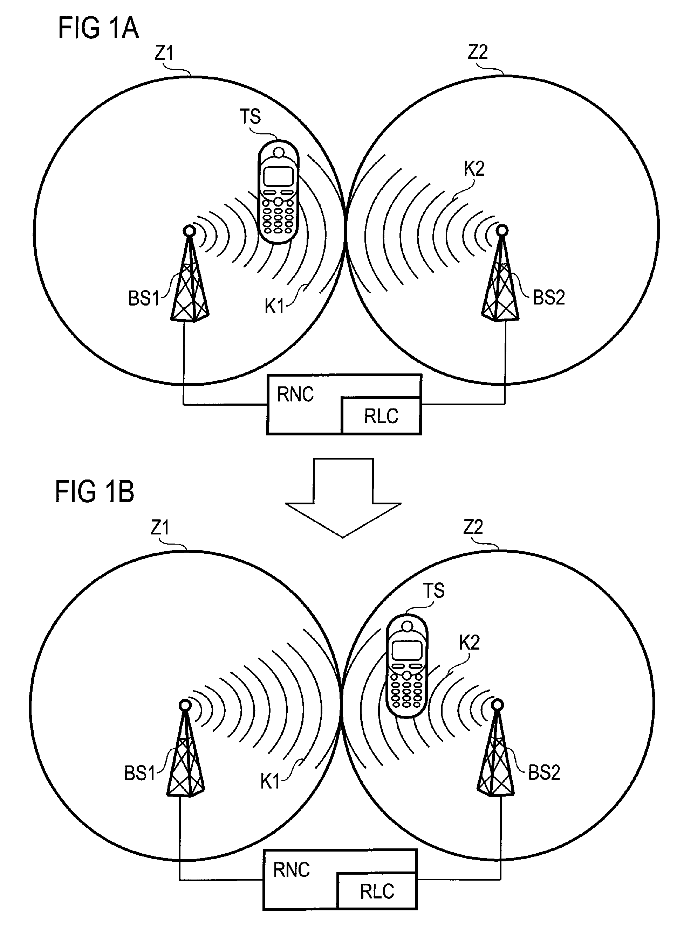

In Fig. 1 ist der funktionale Aufbau eines Funk-Teilsystems eines Funk-Kommunikationssystems dargestellt. Zu diesem Funk-Teilsystem gehört ein Radionetzwerkkontroller RNC und zwei Basisstationen BS1 und BS2. Die Basisstationen BS1 und BS2 sind logische Einheiten, die für die Funkübertragung K1 und K2 in den Funkzellen Z1 und Z2 verantwortlich sind und über eine Schnittstelle mit dem Radionetzwerkkontroller RNC kommunizieren. Bezogen auf das ISO/OSI Referenzmodell unterstützen die Basisstationen BS1 und BS2 zur Teilnehmerstation TS hin nur die physikalische Schicht des Protokollstapels, während der Radionetzwerkcontroller RNC außerdem die Bitübertragungs-, die Sicherungs- und die Vermittlungsschicht des Protokollstapels umfasst. Die Sicherungsschicht zerfällt hierbei in die Unterschichten MAC-Schicht (Medium Access Control), RLC-Schicht (Radio Link Control), PDCP-Schicht (Paket Data Convergence Protocol) und BMC-Schicht (Broadcast/Multicast Control).

Zur Fehlerbehandlung bei der Paketdatenübertragung gibt es im Wesentlichen zwei Ansätze - Vorwärtsfehlerkorrekturverfahren und ARQ-Verfahren (Automatic Repeat Request). Im Unterschied zur Vorwärtsfehlerkorrekturen werden bei den ARQ-Verfahren gestörte Datenpakete nicht vom Empfänger korrigiert und dann akzeptiert, sondern gestützt auf einen Fehler erkennenden Code, mit eventuell zusätzlichen Korrekturen, auf Korrektheit überprüft. Wird bei dem ARQ-Verfahren ein Datenpaket als nicht korrekt erkannt, so wird es im Empfänger erneut von dem Sender angefordert.

Dieses ARQ-Verfahren setzt einen Rückkanal zwischen Sender und Empfänger voraus, über den die Ergebnisse der Fehlerauswertung durch eine Quittung (acknowledgement) dem Sender mitgeteilt werden. Dazu werden alle übertragenden Datenpakete mit einer Laufnummer versehen, die die erste Reihenfolge im Sender definiert. Für ein korrekt empfangenes Datenpaket wird eine positive Quittung gesendet. Ist das empfangende Datenpaket fehlerhaft, so wird eine negative Quittung gesendet und seine erneute Übertragung verlangt. Das Datenpaket hat in der Regel eine für das ARQ-Verfahren spezifische Struktur.

Für eine effektive Nutzung der Funkressourcen mit einer effektiven Realisierung des ARQ-Verfahrens werden entsprechend der Erfindung in der Teilnehmerstation TS die empfangenden Datenpakete in einem Zwischenspeicher in die erste Reihenfolge, d.h. entsprechend der Laufnummer der übertragenden Datenpakete, sortiert. Diese Sortierung der Datenpakete schon in der physikalischen Schicht erleichtert zum einen die weitere Verarbeitung der Datenpakete in höheren Schichten und zum anderen wird das ARQ-Verfahren erleichtert. Darüber hinaus hält/bildet die der Funkzelle Z1 zugeordnete Basisstation BS1 mindestens eine den Inhalt des Zwischenspeichers der Teilnehmerstation TS betreffend Statusinformation in einem Statusspeicher vor/ab. Die Basisstation BS1 muss diese Statusinformationen der übertragenden Datenpakte solange in dem Statusspeicher halten, bis sie als fehlerfrei empfangen von der Teilnehmerstation TS gemeldet worden sind.

Durch diese Verwaltung der Datenpakete in der Basisstation BS1 und der Teilnehmerstation TS ist es möglich, das ARQ-Verfahren in einem ersten Schritt auf der physikalischen Schicht des Protokollstapels der Basisstation BS1 und der Teilnehmerschicht TS durchzuführen.

Im Falle eines Zellwechsels besteht das Problem, das die Statusinformation in der Zielzelle Z2 mit der Basisstation BS2 nicht bekannt ist. Erfindungsgemäß wird die Übermittlung der Datenpakete von der ersten Funkzelle Z1 mit der zugeordneten Basisstation BS1 an die zweite Funkzelle Z2 mit der Basisstation BS2 übergeben, wobei die Statusinformation bezüglich der empfangenden Datenpakete von der ersten Funkzelle Z1 zugeordneten Basisstation BS1 an die der zweiten Funkzelle Z2 zugeordneten Basisstation Z2 übergeben wird.

Für das Übergeben der Statusinformation von der ersten Funkzelle Z1 zur zweiten Funkzelle Z2 werden erfindungsgemäß folgende Möglichkeiten vorgeschlagen.

Erstens kann die Statusinformation mittels eines Basisstationsnetzwerkes - entsprechend dem Radionetzwerkcontrollers RNC in Fig. 1 - zwischen der der ersten Funkzelle Z1 zugeordneten Basisstation BS1 und der der zweiten Funkzelle Z2 zugeordneten Basisstation BS2 übergeben werden.

Zweitens kann die Statusinformation mittels der Teilnehmerstation TS an die der zweiten Funkzelle Z2 zugeordneten Basisstation BS2 übergeben werden. Diese Information wird im Wesentlichen über den Funkkanal K2 zwischen der Teilnehmerstation TS und der Basisstation BS2 übermittelt.

Eine dritte Möglichkeit ist, dass der Statusspeicher in der der zweiten Funkzelle Z2 zugeordneten Basisstation BS2 und der Zwischenspeicher der Teilnehmerstation TS gelöscht und/oder neu initialisiert wird. Für das ARQ-Verfahren auf der Basis der physikalischen Protokollstapelschicht bedeutet dies, dass die in dem Zwischenspeicher gespeicherten Datenpakte erneut von der zweiten Funkzelle Z2 zugeordneten Basisstation BS2 übermittelt werden müssen.

Eine vierte Möglichkeit besteht darin, dass die Statusinformation in der der zweiten Funkzelle Z2 zugeordneten Basisstation BS2 neu initialisiert werden und die Datenpakete in den Zwischenspeicher der Teilnehmerstation TS an höhere Protokollschichten, insbesondere die RLC-Unterschicht der Sicherungsschicht zur weiteren Verarbeitung weitergeben werden. In diesem Fall wird auf ein ARQ-Verfahren in der physikalischen Schicht der Basisstationen BS1 und BS2 verzichtet.

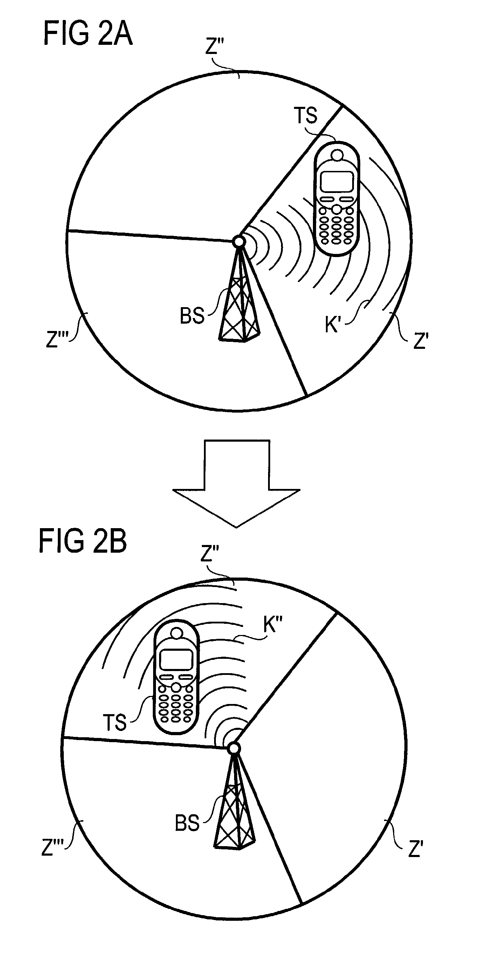

Eine weitere und besonders effiziente Möglichkeit der Übergabe der Statusinformationen von der Basisstation BS1 zur Basisstation BS2 ist das in Fig. 2 dargestellte Ausführungsbeispiel. Die Übergabe der Statusinformationen von der der ersten Funkzelle Z' zugeordneten Basisstation BS an die der zweiten Funkzelle Z'' zugeordneten Basisstation BS muss nicht über externe Vermittlungseinrichtungen erfolgen, wenn die der ersten Funkzelle Z' zugeordneten Basisstation BS und die der zweiten Funkzelle Z'' zugeordnete Basisstation BS2 identisch sind. In diesem Fall können die Statusinformationen basisstationsintern übergeben werden. In dem gezeigten Ausführungsbeispiel ist die Funkzelle in drei Zellsektoren Z', Z'' und Z''' aufgeteilt. Die Basisstation BS ist physikalisch allen drei Zellsektoren Z', Z'' und Z''' zugeteilt, wobei die interne Verwaltung der drei Zellsektoren voneinander unabhängig in der Basisstation BS durchgeführt wird. Im Rahmen dieser Zellsektor unabhängigen Verwaltung werden die Statusinformationen von der Verwaltungseinheit des Zellsektors Z' and Z'' übergeben.

Wie die Ausführungsbeispiele gezeigt haben, erlaubt das erfindungsgemäße Verfahren in einem ersten Schritt ein ARQ-Verfahren auf der physikalischen Schicht des Protokollstapels. Die der ersten Funkzelle Z1 zugeordnete Basisstation BS1 und/oder die der zweiten Funkzelle Z2 zugeordnete Basisstation BS2 werten die Statusinformationen bereits auf der physikalischen Schicht aus. Für den Fall, dass Datenpakete fehlerhaft übertragen wurden, sollen die fehlerhaften Pakete erneut übermittelt werden.

Des Weiteren ist es möglich, dass die Datenpakete des Zwischenspeichers der mindestens einen Teilnehmerstation TS an die dem Zwischenspeicher nachgeordnete Sicherungsschicht RLC des Protokollstapels weitergegeben wird. In dieser Sicherungsschicht werden die Datenpakete weiter verarbeitet und insbesondere in der RLC-Schicht wird ein zweites Mal ein ARQ-Verfahren angewandt. Dies ist die zweite Stufe des ARQ-Verfahrens. Dies zweite Stufe des ARQ-Verfahren findet von den Basisstationen BS1 und BS2 abgesetzt in dem Radionetzwerkcontroller RNC statt.

Mit besonderem Vorteil wird das beschriebene Verfahren auf Funkkanäle angewandt, die nach dem UMTS Standard spezifizierte HSDPA (High Speed Downlink Paket Access) Funkkanäle sind.

## Patentansprüche

1. Verfahren zur paketvermittelten Übertragung von in einer ersten Reihenfolge sortierten, Nutzinformation enthaltenden Datenpaketen in einem zellularen Funk-Kommunikationssystem,
wobei durch eine einer ersten Funkzelle (Z1; Z') zugeordnete Basisstation (BS1; BS) die Datenpakete in einer zweiten Reihenfolge an mindestens eine Teilnehmerstation (TS) über mindestens einen ersten Funkkanal (K1; K')) zumindest teilweise übermittelt werden,
wobei die mindestens eine Teilnehmerstation (TS) die empfangenen Datenpakete in einem Zwischenspeicher in die erste Reihenfolge sortiert und die der ersten Funkzelle (Z1; Z') zugeordnete Basisstation (BS1; BS) mindestens eine den Inhalt des Zwischenspeichers der mindestens einen Teilnehmerstation (TS) betreffende Statusinformation in einem Statusspeicher vorhält und/oder abbildet
**dadurch gekennzeichnet,**
**dass** die Übermittelung der Datenpakete von der ersten Funkzelle (Z1; Z') an eine zweite Funkzelle (Z2; Z'') übergeben wird und dass durch eine der zweiten Funkzelle (Z2; Z'') zugeordneten Basisstation (BS2; BS) die Datenpakete zu der mindestens einen Teilnehmerstation (TS) über mindestens einen weiteren Funkkanal (K2; K'') übermittelt werden, wobei die Statusinformation von der der ersten Funkzelle (Z1; Z'') zugeordneten Basisstation (BS1; BS) an die der zweiten Funkzelle (Z2; Z'') zugeordneten Basisstation (BS2; BS) übergeben wird.

2. Verfahren nach Anspruch 1, **dadurch gekennzeichnet, dass** die der ersten Funkzelle (Z') zugeordnete Basisstation (BS) und die der zweiten Funkzelle (Z'') zugeordnete Basisstation (BS) identisch sind und die Statusinformation basisstations-intern übergeben wird.

3. Verfahren nach Anspruch 1, **dadurch gekennzeichnet, dass**die Statusinformation mittels eines Basisstationsnetzwerks (RNC) zwischen der der ersten Funkzelle (Z1; Z') zugeordneten Basisstation (BS1; BS) und der der zweiten Funkzelle (Z2; Z'') zugeordneten Basisstation (BS2; BS) übergeben wird.

4. Verfahren nach Anspruch 1, **dadurch gekennzeichnet, dass** die Statusinformation mittels der mindestens einen Teilnehmerstation (TS) an die der zweiten Funkzelle (Z2; Z'') zugeordneten Basisstation (BS2; BS) übergeben wird.

5. Verfahren nach Anspruch 1, **dadurch gekennzeichnet, dass** der Statusspeicher in der der zweiten Funkzelle (Z2; Z'') zugeordneten Basisstation (BS2; BS) und der Zwischenspeicher in der mindestens einen Teilnehmerstation (TS) gelöscht und/oder neu initialisiert werden.

6. Verfahren nach Anspruch 1, **dadurch**
**gekennzeichnet, dass** die Statusinformation in der zweiten Funkzelle (Z2; Z'') zugeordneten Basisstation neu initialisiert wird und
dass die Datenpakete des Zwischenspeichers der mindestens einen Teilnehmerstation (TS) an eine dem Zwischenspeicher nachgeordnete Sicherungsschicht (RLC), insbesondere die Radio Link Control Schicht, zur weiteren Verarbeitung weitergegeben werden.

7. Verfahren nach einem der Ansprüche 1 bis 6, **dadurch gekennzeichnet, dass** die der ersten Funkzelle (Z1; Z') zugeordnete Basisstation (BS1; BS) und/oder die der zweiten Funkzelle (Z2; Z'') zugeordnete Basisstation (BS2; BS) die Statusinformation des Zwischenspeichers auswerten und für den Fall, dass Datenpakete fehlerhaft übertragen wurden, die fehlerhaften Datenpakete erneut übermittelt werden.

8. Verfahren nach einem der Ansprüche 1 bis 6, **dadurch gekennzeichnet, dass** die Datenpakete des Zwischenspeichers der mindestens einen Teilnehmerstation (TS) an eine dem Zwischenspeicher nachgeordnete Sicherungsschicht (RLC), insbesondere die Radio Link Control Schicht, zur weiteren Verarbeitung weitergegeben werden.

9. Verfahren nach einem der Ansprüche 1 bis 8, **dadurch gekennzeichnet, dass** der mindestens eine und/oder der weitere Funkkanal (K1, K2; K', K'') ein nach dem UMTS Standard spezifizierte HSDPA (High Speed Downlink Packet Access) Funkkanal ist.

10. Zellulares Funk-Kommunikationssystem zur paketvermittelten Übertragung von Nutzinfomation enthaltenden Datenpaketen
umfassend mindestens eine einer ersten Funkzelle (Z1; Z') zugeordnete Basisstation (BS1; BS) und mindestens eine Teilnehmerstation (TS),
Mittel zum Anordnen von den in einer ersten Reihenfolge sortierten Datenpaketen in eine zweite Reihenfolge,
wobei die der ersten Funkzelle (Z1; Z') zugeordnete Basisstation (BS1; BS) Mittel zum zumindest teilweise Übermitteln der Datenpakete in der zweiten Reihenfolge an die mindestens eine Teilnehmerstation (TS) über mindestens einen ersten Funkkanal (K1; K') umfasst,
wobei die mindestens eine Teilnehmerstation (TS) Mittel zum Sortieren der empfangenen Datenpakete in einem Zwischenspeicher in die erste Reihenfolge umfasst und
wobei die der ersten Funkzelle (Z1; Z') zugeordnete Basisstation (BS1; BS) Mittel zum Vorhalten und/oder Abbilden mindestens einer den Inhalt des Zwischenspeichers der mindestens einen Teilnehmerstation (TS) betreffenden Statusinformation in einem Statusspeicher umfasst,
**dadurch gekennzeichnet,**
**dass** das Funk-Kommunikationssystem Mittel zum Übergeben der Übermittelung der Datenpakete von der ersten Funkzelle (Z1; Z') an eine zweite Funkzelle (Z2; Z'') umfasst und
**dass** eine der zweiten Funkzelle (Z2; Z'') zugeordnete Basisstation (BS2; BS) Mittel zur Übermittelung der Datenpakete zu der mindestens einen Teilnehmerstation (TS) über mindestens einen weiteren Funkkanal (K2; K'') umfasst,
wobei Mittel vorhanden sind, die Statusinformation von der der ersten Funkzelle (Z1; Z') zugeordneten Basisstation (BS1; BS) an die der zweiten Funkzelle (Z2; Z'') zugeordneten Basisstation (BS2; BS) zu übergeben.

11. Basisstation, insbesondere für ein Funk-Kommunikationssystem nach Anspruch 10, **dadurch gekennzeichnet, dass** die der ersten Funkzelle (Z1; Z') zugeordnete Basisstation (BS1; BS) und/oder die der zweiten Funkzelle (Z2; Z'') zugeordneten Basisstation (BS2; BS) Mittel zum Anordnen von den in einer ersten Reihenfolge sortierten Datenpaketen in eine zweite Reihenfolge umfasst.

12. Basisstation nach Anspruch 10 oder 11, **dadurch gekennzeichnet, dass** die der ersten Funkzelle (Z1; Z') zugeordnete Basisstation (BS1; BS) und/oder die der zweiten Funkzelle (Z2; Z'') zugeordneten Basisstation (BS2; BS)
- Mittel zum zumindest teilweise Übermitteln der Datenpakete in der zweiten Reihenfolge an die mindestens eine Teilnehmerstation (TS) über mindestens einen ersten Funkkanal (K1) und
- Mittel zum Vorhalten und/oder Abbilden mindestens einer den Inhalt des Zwischenspeichers der mindestens einen Teilnehmerstation (TS) betreffenden Statusinformation in einem Statusspeicher umfasst.

13. Teilnehmerstation, insbesondere zur Verwendung in einem Funk-Kommunikationssystem nach Anspruch 10, **dadurch gekennzeichnet, dass** die Teilnehmerstation (TS)
- Mittel zum Zwischenspeichern der empfangenen Datenpakete und
- Mittel zum Sortieren der empfangenen Datenpakete in einem Zwischenspeicher in die erste Reihenfolge umfasst.
